# FASCICULE DE BREVET EUROPEEN

(11) **EP 2 004 506 B1**
(45) Date de publication et mention de la délivrance du brevet: **08.11.2017**
(21) Numéro de dépôt: 07735417.3
(22) Date de dépôt: 06.04.2007
(51) Int. Cl.: B65D 35/02, B32B 1/08, B32B 27/32, B29C 65/50

(54) **STRUCTURE MULTICOUCHE FLEXIBLE POUR TUBES**
MEHRSCHICHTIGE TUBENFÖRMIGE VERPACKUNG
FLEXIBLE MULTILAYER STRUCTURE FOR TUBES

(30) Priorité: 06.04.2006 WO PCT/IB2006/051052; 31.07.2006 EP 06118170; 31.07.2006 EP 06118199; 24.11.2006 WO PCT/IB2006/054420
(43) Date de publication de la demande: 24.12.2008
(73) Titulaire: Aisapack Holding SA, 1896 Vouvry (CH)
(72) Inventeur: THOMASSET, Jacques, 1896 Vouvry (CH); MATHIEU, Stéphane, 1896 Vouvry (CH)
(74) Mandataire: Grosfillier, Philippe
(86) Numéro de dépôt international: PCT/IB2007/051248
(87) Numéro de publication internationale: WO 2007/113781

(56) Documents cités:
- EP-A- 1 380 514
- EP-A2- 0 177 470
- GB-A- 1 281 869

## Description

### Domaine de l'invention

L'invention se situe dans le domaine de l'emballage et vise à améliorer les tubes flexibles formés au moyen de films plastiques. Elle concerne plus précisément une structure multicouche de tube et son mode de fabrication.

### Etat de la technique

Les tubes flexibles sont couramment utilisés pour emballer des pâtes dentifrices, des produits cosmétiques, des produits pharmaceutiques ou encore des produits alimentaires.

De nombreux tubes flexibles sont confectionnés à partir d'un laminé dont les extrémités sont reliées par soudage afin de former le corps tubulaire flexible. Le soudage du corps tubulaire est fait par superposition des extrémités du laminé et soudage des surfaces au niveau du recouvrement. Sur ce corps tubulaire, une tête de tube est ensuite soudée ou surmoulée.

Les laminés couramment utilisés résultent du complexage de trois films :
- Un premier film formant la surface supérieure du laminé et la surface externe de l'emballage. Il est généralement imprimé et comporte souvent plusieurs couches. Il est soudé sur le troisième film au niveau du recouvrement des extrémités du laminé. De préférence, ce premier film est constitué de polyoléfines afin de permettre la confection de l'emballage par soudage à grande cadence de production.
- Un second film, emprisonné entre les premier et troisième films, formant la partie centrale du laminé et offrant souvent des propriétés barrières, comme une faible perméabilité aux arômes ou à l'oxygène. Le second film consiste par exemple en une feuille d'aluminium ou en un film multicouche comportant un polymère barrière comme l'éthylène vinyle alcool (EVOH).
- Un troisième film formant la surface inférieure du laminé et la surface interne de l'emballage. Ce film est en contact avec le produit emballé et garantit les propriétés d'hygiène de l'emballage. Il est soudé sur le premier film au niveau du recouvrement des extrémités du laminé. Il est également relié par soudage à la tête de tube. Le troisième film est souvent multicouche et constitué de polyoléfines afin de permettre le soudage à grande cadence de production.

La demande de brevet EP2701926 a pour objet un tube formé d'une jupe flexible multicouche comportant une couche à effet barrière vis-à-vis de l'oxygène et des arômes ; ladite couche étant emprisonnée entre plusieurs couches à base de polyoléfines. L'épaisseur totale des couches situées entre la couche à effet barrière et la surface interne de l'emballage est comprise entre 55 et 135 microns afin de mieux préserver les arômes.

La demande de brevet EP203265 propose un laminé multicouche pour confectionner des tubes flexibles et ayant une grande résistance au vieillissement sous contrainte (stress cracking). La structure multicouche comporte une couche de polyéthylène linéaire basse densité (LLDPE) formant la surface interne du tube. Ladite couche en LLDPE permet le soudage à grande vitesse sur la couche externe en polyéthylène et présente une résistance élevée à la génération de poussières par frottement. EP203265 propose la structure multicouche préférentielle suivante ; les couches étant énumérées depuis la couche supérieure formant la surface externe du tube, vers la couche inférieure du laminé formant la surface interne du tube : PE-PE-papier-LDPE-adhésif-Aluminium-adhésif-LLDPE.

Le brevet US4418841 propose un laminé présentant une résistance élevée grâce à un film de polyéthylène bi orienté (BOPP) emprisonné dans la structure. Le tube comprend en outre une couche de polyéthylène linéaire basse densité (LLDPE) améliorant de façon substantielle la résistance au vieillissement sous contrainte (stress cracking) et la résistance à la formation de poussières par frottement. Le brevet US4418841 propose la structure multicouche préférentielle suivante; les couches étant énumérées depuis la couche supérieure formant la surface externe du tube, vers la couche inférieure du laminé formant la surface interne : LDPE-LDPE-papier-PEI-OPP-PEI-EAA-Aluminium-EAA-LLDPE.

Le brevet US5051266 propose un tube flexible composé d'un laminé dont la couche inférieure formant la surface interne de l'emballage est formée d'un mélange d'éthylène vinyle acétate (EVA) et d'un copolymère d'éthylène acide acrylique. Au moins la couche interne du laminé est irradiée. Le tube est utilisé pour une cuisson in situ du produit emballé ; le tube étant plongé dans un bain aqueux. La structure multicouche proposée dans le brevet US5051266 améliore le contact entre le produit et la surface interne du tube.

La demande EP 1 380 514 décrit un tube flexible sous forme de récipient comprenant une paroi déformable comme un tube, et une couche décorative.

### Problème à résoudre

Les tubes proposés dans l'art antérieur sont confectionnés à partir de laminés comportant de nombreuses couches permettant de :
- garantir des propriétés barrières suffisantes
- permettre le soudage à grande vitesse
- présenter une surface externe imprimée ou imprimable
- garantir une résistance au vieillissement sous contrainte (stress cracking)
- éviter la formation de poussières par frottement
- présenter une résistance suffisante
- garantir des propriétés d'hygiène vis-à-vis du produit emballé

Il est d'un grand intérêt de réduire le nombre de couche de ces laminés afin de simplifier leur procédé de fabrication et aboutir à des complexes plus économiques.

### Définition des termes utilisés dans l'exposé de l'invention

Dans l'exposé de l'invention les termes et abréviations suivantes sont utilisés :
Laminé : film multicouche résultant du complexage de plusieurs films
BOPET : polyéthylène téréphtalathe bi orienté
BOPP : polypropylène bi orienté
BOPA : polyamide bi orienté
PE : polyéthylène
LDPE : polyéthylène basse densité
LLDPE : polyéthylène basse densité linéaire
HDPE : polyéthylène haute densité
EVOH : éthylène alcool vinylique
Adhésif : colle utilisée lors de la confection des laminés pour associer plusieurs films
Colle : produit adhésif servant à coller la bande sur le laminé

Soudage : l'opération de soudage revient à assembler en faisant fondre deux matériaux de même nature ou miscibles à l'état fondu, ladite miscibilité se manifestant par la diffusion et l'interpénétration des chaînes moléculaires ; puis en faisant refroidir lesdits matériaux afin de figer l'état d'interpénétration moléculaire.

Collage : par opposition au soudage, le collage est défini comme une opération d'assemblage de deux matériaux n'étant pas de même nature ou immiscible à l'état fondu. Le collage peut faire intervenir des mécanismes chimiques (réaction des bouts de chaîne, réticulation), des mécanismes physiques (forces de Van des Waals, évaporation). Le collage est une opération d'assemblage pouvant être réalisée à température ambiante ou en chauffant les matériaux.

Couche soudante : couche dont la principale caractéristique est de permettre et faciliter la confection de l'emballage par soudage.

Couche fonctionnelle : couche dont la principale caractéristique est l'apport de propriétés autres que la faculté de se souder. Les couches fonctionnelles généralement de fine épaisseur sont utilisées par exemple pour améliorer l'apparence de l'emballage (couches imprimées, couches transparentes), pour améliorer la résistance de l'emballage (couches bi - orientées, couches techniques), pour apporter des propriétés barrière (oxygène, arômes) ou pour apporter de la fonctionnalité (déchirure facile pour ouverture de l'emballage).

### Exposé général de l'invention

L'invention concerne un tube flexible pour emballage formé d'un laminé comportant au moins une première couche et une deuxième couche tel que défini dans la revendication 1 et des modes d'exécution particuliers sont définis dans les revendications dépendantes.

Avantageusement, l'invention comprend :
- une première couche à base de polyoléfine formant la surface interne de l'emballage,
- une deuxième couche en polymère bi-orientée formant la surface externe de l'emballage.

De préférence la première couche est une couche de polyéthylène pouvant être soudée sur elle-même à grande vitesse. Une couche de polyéthylène basse densité linéaire formant la face interne de l'emballage est avantageuse.

Selon un mode de réalisation de l'invention, le laminé présente une couche à effet barrière vis-à-vis de l'oxygène ou des arômes.

Selon un autre mode de réalisation, les couches à base de polyoléfine représentent au moins 60% de l'épaisseur totale.

Selon un autre mode de réalisation, le laminé présente une épaisseur inférieure à 200 microns.

Préférentiellement, ledit laminé résulte du complexage de seulement deux films.

Le tube selon l'invention présente une résistance à l'éclatement améliorée, une excellente résistance à l'impact lors d'une chute, une très bonne résistance au vieillissement sous contrainte et de bonnes propriétés barrières.

Le tube est confectionné par soudage bout à bout des extrémités du laminé et par ajout d'une bande de faible épaisseur reliant les extrémités dudit laminé.

### Exposé détaillé de l'invention

L'invention décrit un tube ayant une structure multicouche avantageuse. Contrairement à ce qui est proposé dans l'art antérieur, cette structure multicouche se distingue notamment par le fait que les surfaces interne et externe dudit tube ne peuvent être soudées l'une sur l'autre.

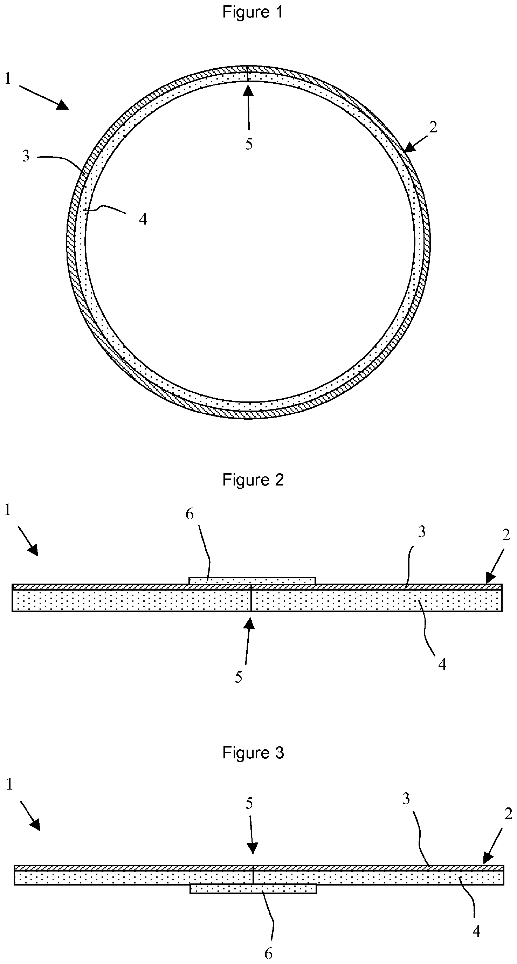

L'invention, illustrée à la figure 1, représente la section d'un corps tubulaire flexible 1 formé par soudage des extrémités d'un laminé 2. Le laminé 2 comporte au moins une première couche 3 formant la surface externe du corps tubulaire, et une deuxième couche 4 formant la surface interne dudit corps tubulaire. La couche 4 se compose de résines à base de polyoléfine et peut se souder facilement sur elle-même au niveau de l'assemblage bout à bout 5 des extrémités du laminé. La couche interne 4 permet l'assemblage d'une tête de tube au niveau de l'extrémité du corps tubulaire 1 ; ladite tête de tube pouvant être assemblée par soudage ou par surmoulage. La couche 4 qui est en contact avec le produit emballé apporte les propriétés d'hygiène requises pour la conservation du produit. De préférence les couches à base de polyoléfine représentent au moins 60% de l'épaisseur du laminé. La couche 3 formant la surface externe du laminé sert généralement de support pour la décoration, ladite décoration pouvant être en surface de l'emballage ou emprisonnée dans l'épaisseur du laminé. La couche 3 est avantageusement une couche fonctionnelle de faible épaisseur et de grande résistance. La couche 3 peut être choisie également pour ses propriétés de surface (touché) et ses propriétés optiques (brillance, transparence). Du fait de la complémentarité de leurs propriétés, les couches 3 et 4 sont de nature différente et ne peuvent être soudées l'une sur l'autre. Les couches formant le laminé sont liées entre elles par un adhésif et assemblées selon les méthodes connues par l'homme du métier. La confection du corps tubulaire ne peut être réalisée par soudage d'un recouvrement des extrémités du laminé, car les couches 3 et 4 ne peuvent être soudées l'une sur l'autre. Une méthode d'assemblage bout à bout des extrémités du laminé est proposée.

Selon un mode préférentiel de l'invention, le laminé 2 résulte de l'assemblage de seulement deux films pouvant contenir plusieurs couches, contrairement aux laminés utilisés actuellement qui nécessitent l'assemblage de trois films. Selon ce mode préférentiel de l'invention un premier film comporte au moins la couche 3 formant la couche externe de l'emballage, et le second film comporte au moins la couche 5 formant la surface interne de l'emballage. De préférence, le premier film comporte des couches fonctionnelles et le second film comporte des couches soudantes.

Selon un mode de réalisation de l'invention particulièrement avantageux, le tube 1 est formé d'un laminé 2 comportant une couche de polymère bi orientée 3 formant sa surface externe. La couche de polymère bi orientée apporte une grande résistance, ainsi que des propriétés optiques (brillance, transparence) qui améliorent l'esthétique de l'emballage. Selon un premier exemple de réalisation de l'invention, le laminé comporte une couche de BOPET formant la surface externe du laminé, et une couche de PEBDL formant la surface interne de l'emballage ; les deux couches étant reliées entre elles par une fine épaisseur de adhésif. La couche de PEBDL représente plus de 80% de l'épaisseur dudit laminé. Afin d'améliorer l'imperméabilité à l'oxygène ou aux arômes de la structure multicouche, il est avantageux d'ajouter une couche supplémentaire à effet barrière. Par exemple, une couche d'EVOH peut être insérée dans la couche de PEBDL. Une autre solution consiste à faire un dépôt Siox sur la couche de BOPET.

La structure multicouche du tube proposée dans l'invention présente de nombreux avantages. Cette structure multicouche comportant un nombre de couche réduit, présente une grande résistance, une faible perméabilité à l'oxygène ou aux arômes, ainsi que d'excellentes propriétés esthétiques. Le tube peut être décoré sur toute la circonférence du corps tubulaire, sans discontinuité de la décoration dans la zone de soudure.

Un point clé de l'invention réside dans la méthode de soudage du laminé pour former le corps tubulaire 1. En effet, il est important que la zone de soudage présente des propriétés similaires à celle du laminé pour que l'emballage possède des propriétés homogènes. L'invention propose une méthode d'assemblage des extrémités du laminé qui permet d'obtenir des propriétés au niveau de la zone soudée au moins égales à celle du laminé. Idéalement, la zone soudée ne peut être détectée par l'utilisateur de l'emballage ; ni esthétiquement, ni mécaniquement.

Une première méthode de confection du corps tubulaire 1 est illustrée figure 2. Cette méthode consiste à souder bout à bout les extrémités du laminé 2 et à renforcer la zone de soudure 5 par l'intermédiaire d'une bande 6 fixée sur la surface externe de l'emballage. En général, l'opération de soudage bout à bout des extrémités du laminé 2 conduit à un assemblage partiel desdites extrémités, seule la couche soudante 4 étant effectivement soudée. Il résulte une zone de fragilité du corps tubulaire au niveau de la zone soudée 5 car la couche 3 n'est pas soudée bout à bout. La bande 6 permet de renforcer la zone soudée et compense la discontinuité de la couche 3 au niveau de la soudure. De préférence, la bande 6 comporte une couche de polymère bi orientée de résistance supérieure ou égale à la résistance de la couche 3. La bande 6 peut être soudée ou collée sur la couche 3. Lorsque la couche 3 est une couche de polymère bi orientée, la bande 6 est généralement collée.

Une deuxième méthode d'assemblage du corps tubulaire 1 est illustrée figure 3. Cette méthode consiste à souder bout à bout les extrémités du laminé 2 et à renforcer la zone de soudure 5 par l'intermédiaire d'une bande 6 fixée sur la surface interne de l'emballage. La bande 6 est soudée sur la couche 4. De préférence, la bande 6 comporte une couche de polyoléfine de même nature que la couche 3. De préférence, la bande 6 comporte également une couche de polymère bi orientée emprisonnée entre deux couches soudantes.

Les couches soudantes du laminé sont généralement à base de polyoléfines (polyéthylène, polypropylène). Le soudage bout à bout met en contact une très faible quantité de matière, ce qui rend plus difficile l'obtention d'un assemblage résistant. Il a été observé qu'une couche soudante composée d'un mélange de 80% de polyéthylène basse densité linéaire et de 20% de polyéthylène basse densité radicalaire permettait d'obtenir une soudure résistante.

Les couches fonctionnelles sont à base d'une grande diversité de résine dont le choix dépend des propriétés recherchées (par exemple : PET, PA, PS, EVOH, PVDC). Les principales couches fonctionnelles utilisées aujourd'hui sont les couches mono ou bi-orientées (PP, PET, PA, PS) ; les films avec des propriétés barrière (PET avec dépôt d'un coating SiOx, PVDC, EVOH, PA). Une couche fonctionnelle peut aussi être en aluminium ou en papier.

Pour apporter des propriétés barrières le laminé peut inclure une couche d'aluminium, une couche de PET ou OPP barrière (avec enduction PVOH, PVDC, SiOx, AlOx, métallisation), une couche coextrudée avec barrière type EVOH ou PVOH.

L'invention permet d'obtenir des emballages avec une variation d'épaisseur négligeable au niveau de la zone soudée et ayant une résistance de la zone soudée équivalente à la résistance du laminé. Les emballages obtenus peuvent être imprimés sur toute leur surface sans rupture de l'impression dans la zone soudée

Les structures de tube décrites précédemment sont particulièrement avantageuses parce qu'elles permettent de confectionner des emballages ayant des propriétés esthétiques améliorées ; l'amélioration de l'esthétique de l'emballage étant liée à la présence de la couche fonctionnelle 3 en surface de l'emballage ; au fait que la zone de soudure est peu visible et que la paroi de l'emballage présente une sur - épaisseur négligeable au niveau de la zone soudée.

L'invention permet de réaliser des emballages économiques, de faible épaisseur et de grande résistance. Les tubes décrits dans l'invention peuvent résulter de l'assemblage de films plastiques multicouches mais également de films comprenant des couches aluminium, des couches de papier ou de carton.

L'épaisseur de la bande est faible devant l'épaisseur du laminé. En général l'épaisseur de la bande est 3 à 10 fois plus faible que l'épaisseur du laminé. L'épaisseur de ladite bande est préférentiellement comprise entre 10 et 60 microns. La bande peut être imprimée ou transparente ; elle peut être collée ou soudée sur la surface du laminée ; elle peut contenir une couche barrière afin d'améliorer les propriétés barrière de l'assemblage. La bande peut être appliquée avant soudage ou après soudage bout à bout du laminé. La bande peut être une bande adhésive dont l'application se fait à température ambiante, la bande peut être collée par ajout de colle à l'interface entre le laminé et ladite bande, la bande peut être collée en chauffant ladite bande, la bande peut être soudée. La force d'adhésion de la bande sur la surface du laminé est un facteur déterminant de la résistance de l'assemblage. Une force d'adhésion trop faible conduit à des risques de rupture de l'assemblage lorsque l'emballage est sollicité en pression, en traction, au pliage, en choc, ou en fatigue. Aussi, il est souhaité d'obtenir une forte adhésion entre la bande et le laminé de sorte que ladite bande ne puisse être séparé dudit laminé.

La bande peut être soudée ou collée sur la surface du laminé. En surface supérieure de l'assemblage formant la surface externe de l'emballage, il est souvent favorable de coller la bande sur le laminé. De nombreuses colles et méthodes de collages peuvent être envisagées. A titre d'exemple une première méthode consiste à rapporter une bande sur laquelle la colle a été préalablement appliquée. Une première variante de cette méthode est la bande adhésive applicable à température ambiante, une seconde variante est une bande adhésive que l'on colle en chauffant. L'utilisation d'une bande adhésive conduit à un procédé facile à maîtriser et facilement industrialisable. Une autre méthode consiste à appliquer la colle sur la bande ou sur le laminé au moment de l'assemblage. L'utilisation de colles réactives à deux composants permet d'obtenir de forts niveaux d'adhésion. Généralement l'opération de collage ne nécessite pas de traitement particulier de la surface de la zone assemblée, cependant il est possible de faire des traitements de surface avant collage (traitement corona par exemple).

En fonction du mode d'application et des propriétés à apporter on trouvera différents types de bandes.
1- la bande est soudée : elle comporte une couche de PET soudant (coextrudé, amorphe, enduit), OPP coextrudé, PE, PP ou vernis thermoscellant par exemple.
2- La bande est collée et est enduite de colle. Sa seule particularité est d'avoir une couche de colle en surface, que ce soit un adhésif utilisable à chaud ou à froid. L'adhésif peut être déposé en ligne ou présent sur la bande. La bande est alors stockée sous forme de bobines, la colle étant alors protégée par un papier ou film siliconé. Le silicone peut éventuellement être déposé directement sur la surface externe de la bande et permettre ainsi d'éviter la protection siliconée à éliminer au moment de la pose de la bande.
   Tout type de matériau est utilisable pour cette bande, et en particulier les matériaux décrits aux points 1 et 2 auxquels on peut ajouter le papier, l'aluminium. La définition de la bande sera alors guidée par les propriétés que l'on recherche en terme de barrière, résistance mécanique, aspect.
3- La bande est collée mais n'est pas elle-même enduite de colle. La colle peut être déposée sur le film 2 ou être déposée en ligne. Les matériaux utilisables sont les mêmes que pour le point 3 ci-dessus.

Pour apporter des propriétés barrières la bande peut inclure une couche d'aluminium, une couche de PET ou OPP barrière (avec enduction PVOH, PVDC, SiOx, AlOx, métallisation, ou tout autre film disponible sur le marché), une couche coextrudée avec barrière type EVOH.

D'une façon générale et pour assurer une continuité des propriétés du produit, la bande de renfort peut inclure les mêmes couches fonctionnelles que les films 2 utilisés pour l'emballage, c'est-à-dire PET, OPP, OPA, PET barrière, PET métallisé, OPP barrière, OPP métallisé, aluminium, papier, PE, PP ...

L'invention est particulièrement avantageuse pour confectionner des tubes flexibles pour produits cosmétiques, pharmaceutiques ou alimentaires

### Exemples de structure de tube

### Exemple 1 :

| | | |
|---|---|---|
| Laminé : BOPET/PEBDL | | |
| Couche 3 : BOPET | épaisseur | 12 microns |
| Couche 4 : PEBDL | épaisseur | 180 microns |
| | | |
| Bande collée sur la couche 3 : BOPET/colle | | |
| BOPET | épaisseur | 20 microns |
| Colle : Bostik vitel 1912 | | |

### Exemple 2 :

| | | |
|---|---|---|
| Laminé : BOPP PVOH/PE | | |
| Couche 3 : BOPP PVOH | épaisseur | 30 microns |
| Couche 4 : PE | épaisseur | 200 microns |
| Bande collée sur la couche 3 : BOPP/colle | | |
| BOPP | épaisseur | 40 microns |
| Colle : Bostik TLH 2013 | | |

### Exemple 3 :

| | | |
|---|---|---|
| Laminé : BOPP/PEBDL | | |
| Couche 3 : BOPP | épaisseur | 20 microns |
| Couche 4 : PEBDL | épaisseur | 180 microns |
| | | |
| Bande soudée sur la couche 4 : PEBDL/BOPET/PEBDL | | |
| PEBDL | épaisseur | 20 microns |
| BOPET | épaisseur | 12 microns |
| PEBDL | épaisseur | 20 microns |

### Autres Exemples de laminé :

| | | |
|---|---|---|
| Laminé : PA/PEBD | | |
| Couche 3 : PA | épaisseur | 40 microns |
| Couche 4 : PEBD | épaisseur | 200 microns |
| | | |
| Laminé : PP/PE | | |
| Couche 3 : PP | épaisseur | 80 microns |
| Couche 4 : PE | épaisseur | 140 microns |
| | | |
| Laminé : Kraft alu/PE | | |
| Couche 3 : Kraft alu | épaisseur | 30 microns |
| Couche 4 : PE | épaisseur | 180 microns |
| | | |
| Laminé : BOPET/PEBDL EVOH | | |
| Couche 3 : BOPET | épaisseur | 12 microns |
| Couche 4 : PEBD EVOH PEBDL | épaisseur | 180 microns |

## Revendications

1. Tube (1) flexible pour emballage formé d'un laminé comportant au moins une première couche (4) et une deuxième couche (3), **caractérisé par le fait que** la première couche (4) est constituée d'un matériau dont les propriétés rendent possible le soudage de la première couche (4) sur elle-même et **par le fait que** la deuxième couche (3) est constituée d'un matériau dont les propriétés ne rendent pas possible le soudage de la deuxième couche (3) sur la première couche (4); la première (4) et la deuxième couche (3) formant respectivement les couches interne et externe du tube, la première couche (4) étant à base de polyoléfine et la deuxième couche (3) étant en polymère bi-orienté.

2. Tube flexible selon la revendication 1 n'étant constitué que de la première (4) et de la deuxième couche (3).

3. Tube flexible selon l'une quelconque des revendications précédentes dans lequel la deuxième couche (3) est constituée d'un matériau dont les propriétés rendent possible le soudage au moins partiel de la deuxième couche (3) sur elle-même.

4. Tube flexible selon l'une quelconque des revendications précédentes dans lequel les extrémités sont soudées bout à bout.

5. Tube flexible selon l'une quelconque des revendications précédentes comprenant une bande (6) fixée sur le tube (1) et recouvrant ses extrémités.

6. Tube selon la revendication précédente dans lequel la bande (6) est fixée sur la surface externe du tube (1).

7. Tube selon la revendication 5 dans lequel la bande (6) est fixée sur la surface interne du tube (1).

## Patentansprüche

1. Flexible Verpackungstube (1), die aus einem Laminat gebildet ist, das mindestens eine erste Lage (4) und eine zweite Lage (3) umfasst, **dadurch gekennzeichnet, dass** die erste Lage (4) aus einem Material besteht, dessen Eigenschaften das Verschweißen der ersten Lage (4) mit sich selbst ermöglichen, und dass die zweite Lage (3) aus einem Material besteht, dessen Eigenschaften das Verschweißen der zweiten Lage (3) mit der ersten Lage (4) nicht ermöglichen; wobei die erste (4) und die zweite Lage (3) jeweils innere und äußere Lagen der Tube bilden, wobei die erste Lage (4) auf Polyolefin basiert und die zweite Lage (3) ein biaxial ausgerichtetes Polymer ist.

2. Flexible Tube nach Anspruch 1, die nur aus der ersten (4) und der zweiten Lage (3) besteht.

3. Flexible Tube nach einem der vorhergehenden Ansprüche, bei der die zweite Lage (3) aus einem Material besteht, dessen Eigenschaften ein zumindest teilweises Verschweißen der zweiten Lage (3) mit sich selbst ermöglichen.

4. Flexible Tube nach einem der vorhergehenden Ansprüche, bei der die Enden stumpfgeschweißt sind.

5. Flexible Tube nach einem der vorhergehenden Ansprüche, die einen Streifen (6) umfasst, der an der Tube (1) fixiert ist und ihre Enden bedeckt.

6. Tube nach dem vorhergehenden Anspruch, bei der der Streifen (6) auf der Außenfläche der Tube (1) fixiert ist.

7. Tube nach Anspruch 5, bei der der Streifen (6) auf der Innenfläche der Tube (1) fixiert ist.

## Claims

1. Flexible packaging tube (1) formed from a laminate comprising at least one first layer (4) and one second layer (3), **characterized in that** the first layer (4) is formed from a material whose properties make it possible to weld the first layer (4) to itself and **in that** the second layer (3) is formed from a material whose properties make it impossible to weld the second layer (3) onto the first layer (4); the first layer (4) and the second layer (3) forming respectively the inner and outer layers of the tube, the first layer (4) being based on polyolefin and the second layer (3) being made of biaxially-oriented polymer.

2. Flexible tube according to Claim 1, being formed only from the first layer (4) and the second layer (3).

3. Flexible tube according to either one of the preceding claims, in which the second layer (3) is formed from a material whose properties make it possible to at least partially weld the second layer (3) to itself.

4. Flexible tube according to any one of the preceding claims, in which the ends are butt-welded.

5. Flexible tube according to any one of the preceding claims, comprising a strip (6) fixed to the tube (1) and covering its ends.

6. Tube according to the preceding claim, in which the strip (6) is fixed to the outer surface of the tube (1).

7. Tube according to Claim 5, in which the strip (6) is fixed to the inner surface of the tube (1).
